# EUROPÄISCHE PATENTANMELDUNG

(11) **EP 0 836 934 A2**
(43) Veröffentlichungstag der Anmeldung: **22.04.1998**
(21) Anmeldenummer: 97116451.2
(22) Anmeldetag: 22.09.1997
(51) Int. Cl.: B32B 21/02, A47B 96/20

(54) **Möbelfrontplatte**

(30) Priorität: 28.09.1996 DE 19640090
(71) Anmelder: Vietmeyer, Adolf, 32108 Bad Salzuflen (DE)
(72) Erfinder: Vietmeyer, Adolf, 32108 Bad Salzuflen (DE)
(74) Vertreter: Stracke, Alexander, Dipl.-Ing.

(57) **Zusammenfassung**

Gegenstand der Erfindung ist eine Möbelfrontplatte (10).

Die Möbelfrontplatte (10) ist aus einer Vielzahl von schichtweise aufeinanderliegenden und miteinander verleimten, mitteldichten Faserplatten (11, 12) hergestellt. Die einzelnen, mitteldichten Faserplatten (11, 12) sind aus unterschiedlich hellen Ausgangsmaterialien hergestellt, so daß sich eine Möbelfrontplatte (10) ergibt, welche alle bekannten Vorteile einer mitteldichten Faserplatte aufweist, gleichzeitig aber im umlaufenden Kantenbereich, der keine zusätzlichen Umleimer oder dergleichen benötigt, den Aufbau einer Schichtholzplatte aufweist.

Die Möbelfrontplatte (10) kann auch durch Verwendung eines Leimes, der in einem von der Farbe der einzelnen Faserplatten (11, 12) abweichenden Ton eingefärbt ist, hergestellt werden, wodurch zusätzliche Schichtholz-Effekte erzielt werden können.

Schließlich ist es auch möglich, zwischen die einzelnen Faserplatten (11, 12) Furniere oder Folien einzubinden.

## Beschreibung

Die vorliegende Erfindung betrifft eine Möbelfrontplatte sowie ein Verfahren zu deren Herstellung.

Möbelfrontplatten sind in den verschiedensten Ausführungsformen bekannt.

Grundsätzlich können Möbelfrontplatten aus Massivholz hergestellt sein, derartige Massivholz-Platten werden aber insbesondere aus Kostengründen heute nicht mehr verwendet.

Überwiegend werden heute Möbelfrontplatten aus Spanplatten oder als mitteldichte Faserplatten hergestellt.

Faserplatten sind aus relativ groben Holzfasern im Preßverfahren hergestellte Platten, die im Kantenbereich eine relativ rauhe Oberflächenstruktur aufweisen, so daß derartige Möbelfrontplatten grundsätzlich im Kantenbereich mit Umleimern, Furnierfolien oder Kunststoffleisten ausgestattet werden müssen.

Mitteldichte Faserplatten werden aus feingemahlenen Holzfasern ebenfalls im Preßverfahren hergestellt und weisen im Unterschied zu den einfachen Faserplatten eine auch im Kantenbereich absolut dichte Struktur auf, so daß derartige mitteldichte Faserplatten im umlaufenden Kantenbereich ohne zusätzliche Kantenleisten verwendet werden können. Dabei ist aber aufgrund der feingemahlenen Ausgangsprodukte keine direkte Holzstruktur mehr erkennbar.

In der Möbelindustrie werden heute verstärkt Möbelfrontplatten nachgefragt, die im Kantenbereich mit Leisten versehen sind, welche den Eindruck vermitteln, als handele es sich bei der vorliegenden Möbelfrontplatte um eine Schichtholzplatte. Derartige Leisten weisen abwechselnd helle und dunkle Streifen auf, die den besagten Schichtholzplatten-Effekt ergeben.

Das zusätzliche bzw. nachträgliche Aufbringen derartiger Kantenleisten und die damit verbundene Nacharbeit ist ein nicht unbeträchtlicher Kostenfaktor bei der Herstellung von Möbelfrontplatten.

Der vorliegenden Erfindung liegt die Aufgabe zugrunde, eine Möbelfrontplatte zu schaffen, die auf der einen Seite preiswert herstellbar und gleichzeitig hoch belastbar ist und auf der anderen Seite im Kantenbereich einen Schichtholzaufbau vermittelt, ohne daß hierfür im Kantenbereich zusätzliche Kantenleisten, Umleimer oder dergleichen benötigt werden.

Eine erste Lösung dieser Aufgabe besteht darin, daß die Möbelfrontplatte aus schichtweise aufeinanderliegenden und miteinander verleimten, mitteldichten Faserplatten besteht, wobei die einzelnen mitteldichten Faserplatten aus unterschiedlich hellen Ausgangsmaterialien hergestellt sind.

Eine zweite Lösung der gestellten Aufgabe besteht darin, daß die Möbelfrontplatte aus einer Vielzahl von schichtweise aufeinanderliegenden und miteinander verleimten, mitteldichten Faserplatten besteht, wobei der Leim in einem von der Farbe der einzelnen Faserplatten abweichenden Ton eingefärbt ist.

Eine dritte Lösung der gestellten Aufgabe besteht darin, daß die Möbelfrontplatte aus einer Vielzahl von schichtweise aufeinanderliegenden und miteinander verleimten, mitteldichten Faserplatten besteht, wobei die einzelnen mitteldichten Faserplatten aus unterschiedlich hellen Ausgangsmaterialien hergestellt sind und der Leim in einem von der Farbe der einzelnen Faserplatten abweichenden Ton eingefärbt ist.

Allen Lösungen liegt letztendlich der gemeinsame Gedanke zugrunde, einerseits die bekannten Vorteile von mitteldichten Faserplatten zu nutzen und dabei im umlaufenden Kantenbereich die Optik einer Schichtholzplatte zu erzielen.

Die bekannten Vorteile mitteldichter Faserplatten liegen in der hohen Tragfähigkeit einerseits und in der hohen Homogenität des Materiales andererseits, durch welche der Verzicht auf Kantenumleimer oder dergleichen erst möglich ist.

Die Optik einer Schichtholzplatte wird durch die in den unabhängigen Patentansprüchen 1 - 3 aufgezeigten Merkmale erreicht.

Dabei sind die erzielbaren Wirkungen durchaus unterschiedlich und ermöglichen eine verhältnismäßig große Variationsbereite hinsichtlich des erzielten Schichtholz-Effektes.

Der vorliegenden Erfindung liegt weiterhin die Aufgabe zugrunde, ein Verfahren zur Herstellung einer Möbelfrontplatte aufzuzeigen, mit dem auf preiswerte Art und Weise hoch belastbare und im Kantenbereich keine Umleimer oder dergleichen benötigende Möbelfrontplatten mit Schichtholz-Effekt herstellbar sind.

Eine Lösung dieser Aufgabe besteht darin, daß zunächst aus Holzfasern aus unterschiedlichen Holzsorten oder aus Holzfasern unterschiedlicher Einfärbung relativ dünne, mitteldichte Faserplatten hergestellt und anschließend eine Vielzahl dieser dünnen Faserplatten zu einer dickeren Platte miteinander verleimt werden.

Eine weitere Lösung der gestellten Aufgabe besteht darin, daß zunächst aus Holzfasern relativ dünne, mitteldichte Faserplatten hergestellt und anschließend eine Vielzahl dieser dünnen Faserplatten unter Verwendung eines gefärbten Leimes zu einer dicken Platte miteinander verleimt werden.

Eine dritte Lösung dieser Aufgabe besteht erfindungsgemäß darin, daß zunächst aus Holzfasern aus unterschiedlichen Holzsorten oder aus Holzfasern unterschiedlicher Einfärbung relativ dünne, mitteldichte Faserplatten hergestellt und anschließend eine Vielzahl dieser dünnen Faserplatten zu einer dickeren Platte miteinander verleimt werden, wobei der verwendete Leim in einem von der Farbe der einzelnen verwendeten dünnen Faserplatten abweichenden Ton eingefärbt ist.

Weitere Merkmale der Erfindung sind Gegenstand von Unteransprüchen.

Ausführungsbeispiele der Erfindung sind in der beigefügten Zeichnung dargestellt und werden im folgenden näher beschrieben.

Es zeigen:
- Figur 1: eine perspektivische Teildarstellung einer erfindungsgemäßen Möbelfrontplatte,
- Figur 2: einen schematisch dargestellten Schnitt durch eine erfindungsgemäße Möbelfrontplatte vor ihrer Fertigstellung,
- Figur 3: einen Teilschnitt durch eine Möbelfrontplatte nach einem weiteren Ausführungsbeispiel der Erfindung.

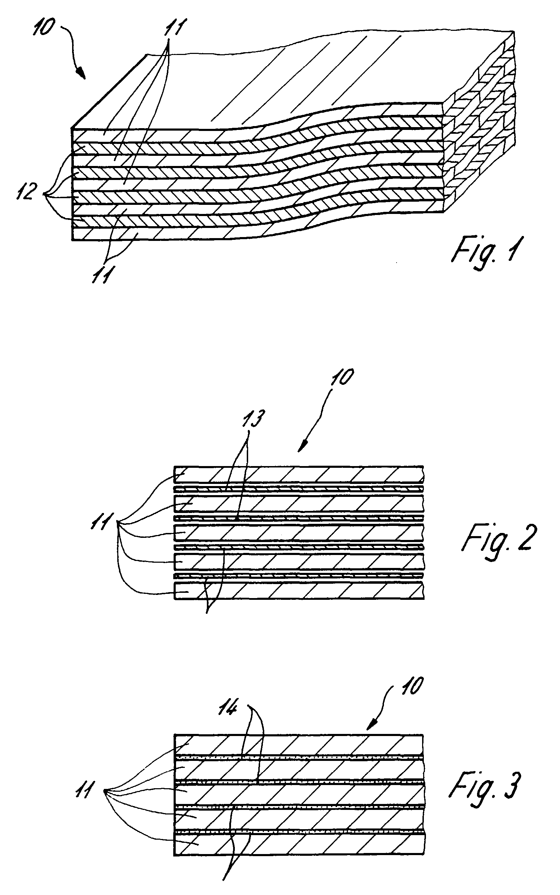

In Figur 1 ist mit dem Bezugszeichen 10 eine Möbelfrontplatte bezeichnet, die aus einer Vielzahl von schichtweise aufeinanderliegenden und miteinander verleimten mitteldichten Faserplatten 11 und 12 besteht.

In Figur 1 ist durch die unterschiedliche Strichelung der einzelnen mitteldichten Faserplatten 11 bzw. 12 angedeutet, daß diese einzelnen, dünnen Faserplatten 11 bzw. 12 aus unterschiedlich hellen Ausgangsmaterialien hergestellt sind, so daß sich bezüglich der fertigen Möbelfrontplatte 10 im umlaufenden Kantenbereich der Effekt einer Schichtholzplatte ergibt.

Die einzelnen Faserplatten 11 bzw. 12 können aus unterschiedlichen Holzsorten hergestellt sein, beispielsweise abwechselnd aus Buche und Pappel, ebenso besteht die Möglichkeit, die Faserplatten 11 und 12 aus den gleichen Ausgangsmaterialien herzustellen, dieses aber unterschiedlich einzufärben.

Es können innerhalb einer erfindungsgemäßen Möbelfrontplatte 10 selbstverständlich auch mehr als zwei unterschiedliche Farbtöne für die einzelnen, dünnen, mitteldichten Faserplatten 11 und 12 verwendet werden.

Aufgrund der Eigenschaften der mitteldichten, dünnen Faserplatte 11 und 12 ist im umlaufenden Kantenbereich lediglich noch eine Versiegelung beispielsweise durch Klarlack vorzusehen, die Verwendung von Umleimern, Kantenleisten und dergleichen ist aber nicht erforderlich und somit ist eine erfindungsgemäße Möbelfrontplatte mit einer Schichtholz-Optik im umlaufenden Kantenbereich äußerst preiswert herstellbar. Gleichzeitig weist die Möbelfrontplatte 10 alle bekannten Vorteile von mitteldichten Faserplatten auf.

In Figur 2 ist der Aufbau einer weiteren Möbelfrontplatte 10 gemäß vorliegender Erfindung gezeigt. Hier ist angedeutet, daß zwischen mehreren, aufeinanderliegenden, relativ dünnen mitteldichten Faserplatten 11 Folien oder Furniere 13 angeordnet sind, die gemeinsam mit den mitteldichten Faserplatten 11 zu einer kompletten Möbelfrontplatte 10 verleimt werden. Durch die Zwischenlage der Furniere oder Folien 13 kann ebenfalls der Eindruck einer Schichtholzplatte mit den beträchtlichen Vorteilen einer mitteldichten Faserplatte kombiniert werden.

Auch bei einem Aufbau einer Möbelfrontplatte 10 gemäß Figur 2 können die einzelnen mitteldichten Faserplatten aus unterschiedlichen Ausgangsmaterialien oder aus unterschiedlich eingefärbten Materialien bestehen.

Dies macht deutlich, daß eine enorme Variationsbreite hinsichtlich der erzielbaren Optik der Schichtholzkanten gegeben ist.

Figur 3 zeigt noch ein weiteres Ausführungsbeispiel der Erfindung, welches sich dadurch auszeichnet, daß die Möbelfrontplatte 10 wiederum aus mehreren, schichtweise aufeinanderliegenden und miteinander verleimten, mitteldichten Faserplatten 11 besteht, wobei der - aus Gründen einer klaren Darstellung - stark vergrößert gezeichnete Leim 14 in einem von der Farbe der einzelnen Faserplatten 11 abweichenden Ton eingefärbt ist.

Auch hier können die einzelnen Faserplatten 11 aus dem gleichen Ausgangsmaterial hergestellt oder in unterschiedlichen Farbtönen Verwendung finden.

Zurückkommend auf das Ausführungsbeispiel gemäß Figur 1 sei noch besonders hervorgehoben, daß sich erfindungsgemäße Möbelfrontplatten 10 besonders für eine plastische Verformung eignen, da in diesem Falle der Verlauf der einzelnen Schichten der durchgeführten Verformung anschließt, wodurch der Eindruck einer echten Schichtholzplatte verstärkt wird.

## Patentansprüche

1. Möbelfrontplatte, **dadurch gekennzeichnet, daß** die Möbelfrontplatte (10) aus einer Vielzahl von schichtweise aufeinanderliegenden und miteinander verleimten, mitteldichten Faserplatten (11, 12) besteht, wobei die einzelnen mitteldichten Faserplatten (11, 12) aus unterschiedlich hellen Ausgangsmaterialien hergestellt sind.

2. Möbelfrontplatte, **dadurch gekennzeichnet, daß** die Möbelfrontplatte (10) aus einer Vielzahl von schichtweise aufeinanderliegenden und miteinander verleimten, mitteldichten Faserplatten (11) besteht, wobei der Leim (14) in einem von der Farbe der einzelnen Faserplatten (11) abweichenden Ton eingefärbt ist.

3. Möbelfrontplatte, **dadurch gekennzeichnet, daß** die Möbelfrontplatte aus einer Vielzahl von schichtweise aufeinanderliegenden und miteinander verleimten, mitteldichten Faserplatten (11, 12) besteht, wobei die einzelnen mitteldichten Faserplatten (11, 12) aus unterschiedlich hellen Ausgangsmaterialien hergestellt sind und der Leim in einem von der Farbe der einzelnen Faserplatten (11, 12) abweichenden Ton eingefärbt ist.

4. Möbelfrontplatte, **dadurch gekennzeichnet, daß** die Möbelfrontplatte (10) aus einer Vielzahl von schichtweise aufeinanderliegenden und unter Zwischenlage eines Furnieres oder einer Folie (13) miteinander verleimten, mitteldichten Faserplatten (11) besteht.

5. Möbelfrontplatte nach Anspruch 4, **dadurch gekennzeichnet, daß** die Faserplatten (11) aus unterschiedlichen Ausgangsmaterialien hergestellt sind.

6. Möbelfrontplatte nach Anspruch 4 oder 5, **dadurch gekennzeichnet, daß** der die Faserplatten (11) sowie die Folie oder das Furnier (13) miteinander verbindende Leim in einem von der Farbe der einzelnen Faserplatten (11) abweichenden Ton eingefärbt ist.

7. Verfahren zur Herstellung einer Möbelfrontplatte, **dadurch gekennzeichnet, daß** zunächst aus Holzfasern aus unterschiedlichen Holzsorten oder aus Holzfasern unterschiedlicher Einfärbung relativ dünne, mitteldichte Faserplatten (11, 12) hergestellt und anschließend eine Vielzahl dieser dünnen Faserplatten (11, 12) zu einer dickeren Platte miteinander verleimt werden.

8. Verfahren zur Herstellung einer Möbelfrontplatte, **dadurch gekennzeichnet, daß** zunächst aus Holzfasern relativ dünne, mitteldichte Faserplatten (11) hergestellt und anschließend eine Vielzahl dieser dünnen Faserplatten (11) unter Verwendung eines gefärbten Leimes (14) zu einer dicken Platte miteinander verleimt werden.

9. Verfahren zur Herstellung einer Möbelfrontplatte, **dadurch gekennzeichnet, daß** zunächst aus Holzfasern aus unterschiedlichen Holzsorten oder aus Holzfasern unterschiedlicher Einfärbung relativ dünne, mitteldichte Faserplatten (11, 12) hergestellt und anschließend eine Vielzahl dieser dünnen Faserplatten (11, 12) zu einer dickeren Platte miteinander verleimt werden, wobei der verwendete Leim (14) in einem von der Farbe der einzelnen Faserplatten (11, 12) abweichenden Ton eingefärbt ist.

10. Verfahren zur Herstellung einer Möbelfrontplatte, **dadurch gekennzeichnet, daß** zunächst aus Holzfasern relativ dünne, mitteldichte Faserplatten (11) hergestellt und anschließend eine Vielzahl dieser dünnen Faserplatten (11) unter Zwischenlage einer Folie oder eines Furnieres (13) zu einer dickeren Platte miteinander verleimt werden.
